# EUROPÄISCHE PATENTSCHRIFT

(11) **EP 3 052 412 B1**
(45) Veröffentlichungstag und Bekanntmachung des Hinweises auf die Patenterteilung: **22.11.2017**
(21) Anmeldenummer: 14772339.9
(22) Anmeldetag: 24.09.2014
(51) Int. Cl.: B65H 3/22, B25J 15/00

(54) **NADELGREIFER**
NEEDLE GRIPPER
DISPOSITIF DE PRÉHENSION À AIGUILLE

(30) Priorität: 01.10.2013 DE 102013219933
(43) Veröffentlichungstag der Anmeldung: 10.08.2016
(73) Patentinhaber: J. Schmalz GmbH, 72293 Glatten (DE)
(72) Erfinder: WERNI, Benjamin, 71149 Bondorf (DE); STAHL, Tobias, 72293 Glatten (DE)
(74) Vertreter: DREISS Patentanwälte PartG mbB
(86) Internationale Anmeldenummer: PCT/EP2014/070382
(87) Internationale Veröffentlichungsnummer: WO 2015/049141

(56) Entgegenhaltungen:
- DE-A1-102011 010 326
- DE-A1-102011 083 451
- DE-U1-202012 100 849

## Beschreibung

Die Erfindung betrifft einen Nadelgreifer gemäß dem Oberbegriff des Anspruchs 1.

Sogenannte Nadelgreifer sind Vorrichtungen mit vorzugsweise einer Mehrzahl von Greifnadeln, welche zum Greifen eines Werkstückes aus einem Greiferbasisteil oder einem Greifergehäuse ein- und ausfahrbar sind. Solche Nadelgreifer finden insbesondere Verwendung, um Gewebe, Faserwerkstoffe, Faserverbundwerkstoffe oder sonstige mit Nadeln durchdringbare Werkstoffe zu greifen. Nadelgreifer finden insbesondere auch Verwendung, um lagenweise solche Werkstücke von einem Werkstückstapel aufzunehmen und dadurch zu vereinzeln.

Die Zuverlässigkeit des Nadelgreifers hängt dabei von einem präzisen und störungsfreien Ein- und Ausfahren der Greifnadeln ab. Hierbei kann es einerseits problematisch sein, wenn die Hubtiefe der greifenden Nadeln nicht auf die Eigenschaften der Werkstücke, insbesondere auf die Dicke der Werkstücklage, angepasst ist. In diesem Fall ist ein zuverlässiges Aufnehmen und Vereinzeln einer einzelnen Werkstücklage nicht zuverlässig möglich. Außerdem können bei wiederholtem Aufnehmen von Faserwerkstücken aufgrund des Einfahrens und Ausfahrens der Greifnadeln ungewollt Faserteile in die Greifvorrichtung eingezogen werden, was ebenfalls die Zuverlässigkeit beeinträchtigt und Wartungen und Reinigungen erforderlich machen kann.

Aus der DE 10 2011 010 326 A1 und der DE 20 2012 100 849 U1 sind Nadelgreifer bekannt, bei welchen das Einfahren und Ausfahren der Greifnadeln über ein Ritzelgetriebe von einem axial verlagerbaren, insbesondere pneumatisch angetriebenen Kolben angetrieben wird. Dabei wird der Hub des Antriebskolbens mittels eines in axialer Richtung des Kolbens wirkenden Anschlages begrenzt. Eine Einstellung des Kolbenhubes und damit indirekt des Hubes der ein- und ausfahrbaren Greifnadeln erfordert dabei eine Veränderung der axialen Position des Anschlages für den Antriebskolben.

Die Aufgabe der vorliegenden Erfindung besteht darin, bei einem Nadelgreifer die Zuverlässigkeit der Handhabung von Werkstücken zu erhöhen und gleichzeitig die Störanfälligkeit des Nadelgreifers im Betrieb zu verringern. Hierbei soll insbesondere eine zuverlässige Anpassung der Eindringtiefe der Greifnadeln ermöglicht werden, und die bei wiederholten Greifvorgängen notwendig werdenden Reinigungs- und Wartungsarbeiten sollen komfortabel ermöglicht werden.

Diese Aufgabe wird durch einen Nadelgreifer gemäß Anspruch 1 gelöst. Der Nadelgreifer umfasst eine Greifeinheit, eine Antriebseinheit und eine Einstelleinrichtung zur Einstellung der Nadelhubtiefe. Diese Einheiten können in einem gemeinsamen Greifergehäuse untergebracht sein. Denkbar sind jedoch auch modulare Ausgestaltungen, bei der einzelne Einheiten, insbesondere Antriebseinheit und Greifeinheit, bzw. baugruppenartig in separaten Einheitengehäusen untergebracht sind.

Die Greifeinheit weist eine dem zu greifenden Werkstück zugewandte Greiffläche auf, sowie wenigstens einen und vorzugsweise zwei oder mehrere Nadelschlitten mit jeweils zumindest einer Greifnadel. Der Nadelschlitten ist verfahrbar in der Greifeinheit angeordnet und kann in eine aktive Stellung bewegt werden, in welcher die Greifnadel um eine Nadelhubtiefe über die Greiffläche zum Greifen des Werkstückes ausgefahren ist, sowie in eine passive Stellung, in welcher die Greifnadel zurückgezogen ist. Grundsätzlich können die Greifnadeln selbst auch schräg zur Greiffläche eingefahren und ausgefahren werden, wodurch das gegriffene Werkstück gegen Abrutschen von der Nadel gesichert werden kann. Auch wenn die Greifnadeln schräg ein- und ausgefahren werden, so ist im vorliegenden Zusammenhang die Nadelhubtiefe als ein Maß im Wesentlichen senkrecht zur Greiffläche zu verstehen.

Die Antriebseinheit umfasst einen entlang einer Antriebsrichtung verfahrbaren Antriebsaktor. Dieser kann eine Hubbewegung zwischen zwei Stellungen (im Folgenden vorgefahrene und rückgefahrene Stellung genannt) ausführen. Der Antriebsaktor ist derart mit dem Nadelschlitten bewegungsgekoppelt, dass bei Verfahren des Antriebsaktors in eine erste Richtung (z.B. sog. Rückfahren) der Nadelschlitten in die aktive Stellung (ausgefahrene Greifnadeln) bewegt wird und bei Verfahren des Antriebsaktors in eine zweite Stellung (z.B. sog. Vorfahren) der Nadelschlitten in die passive Stellung (eingefahrene Greifnadeln) bewegt wird.

Die Einstelleinrichtung dient der Einstellung der Nadelhubtiefe und weist einen senkrecht zu der Antriebsrichtung des Antriebsaktors verlagerbaren Führungsschlitten auf. Die Richtung, entlang der sich der Führungsschlitten verlagern kann, wird im Folgenden als Führungsrichtung bezeichnet. Die Bewegungsfreiheit des Führungsschlittens entlang der Führungsrichtung ist zumindest einseitig durch einen Anschlag begrenzt. Der Antriebsaktor ist mittels eines Verbindungsarmes derart mit dem Führungsschlitten bewegungsgekoppelt, dass der Führungsschlitten bei Rückfahren des Antriebsaktors in Richtung gegen den Anschlag gezogen wird und so ein weiteres Rückfahren des Antriebsaktors durch Blockierung des Führungsschlittens unterbunden ist.

Insofern ist der Führungsschlitten senkrecht zum Hub des Antriebsaktors verschiebbar. Durch den Verbindungsarm ist die Bewegung des Antriebsaktors insbesondere starr mit der Bewegung des Führungsschlittens gekoppelt. Insofern wird bei Rückfahren des Antriebsaktors der Führungsschlitten gegen den Anschlag gezogen und bei einem Vorfahren des Antriebsaktors in Richtung von dem Anschlag weg bewegt. Die Bewegungen von Führungsschlitten und Antriebsaktor sind insofern zwangsgekoppelt und nur gemeinsam möglich. Wenn der Führungsschlitten auf den Anschlag trifft, so beschränkt dies eine weitere Bewegung des Antriebsaktors.

Durch den Anschlag wird die Endposition des Führungsschlittens insbesondere in derjenigen Richtung vorgegeben, welche mit der Rückfahrbewegung des Antriebsaktors korrespondiert. Dadurch wird lediglich mittelbar die Endposition des Antriebsaktors in derjenigen Richtung vorgegeben, welche mit der ausgefahrenen Stellung der Greifnadeln korrespondiert. Dadurch ist die Nadelhubtiefe einstellbar. Für den Antriebsaktor selbst ist kein Anschlag erforderlich. Anders als in dem eingangs genannten Stand der Technik ist der begrenzende Anschlag auch nicht axial zu dem Antriebskolben vorgesehen. Der bei den genannten konstruktiven Lösungen notwendige Bauraum in axialer Richtung kann daher eingespart werden oder anders genutzt werden.

Um die senkrechten Bewegungen von Antriebsaktor und Führungsschlitten zueinander zu koppeln, verläuft der Verbindungsarm vorzugsweise schräg zur Antriebsrichtung und schräg zu der Führungsrichtung, so dass eine Schrägführung zwischen Antriebsaktor und Führungsschlitten realisiert wird. Der Winkel des Verbindungsarmes bzw. dessen Erstreckungsrichtung zur Antriebsrichtung und zur Führungsrichtung ist insbesondere bei Bewegung von Antriebsaktor und Führungsschlitten fest. Vorzugsweise liegt der Winkel im Bereich von 45° zu den beiden senkrechten Richtungen.

Zur Fixierung des Winkels von Verbindungsarm und Antriebsrichtung bzw. kann der Verbindungsarm einerseits an dem Antriebsaktor fixiert sein, und andererseits an einer vom Antriebsaktor beabstandeten Position einen Führungszapfen aufweisen, welcher in einer sich parallel zur Antriebsrichtung erstreckenden Laufnut in wenigstens einer Gehäusewandung geführt ist. Insofern kann der Verbindungsarm als Ganzes mit dem Antriebsaktor bei dessen Vorfahr- und Rückfahrbewegung mitbewegt werden. Der Führungszapfen läuft dabei in der Laufnut parallel zur Antriebsrichtung mit, wodurch der Winkel des Verbindungsarmes konstant bleibt.

Um bei konstantem Winkel des Verbindungsarmes eine Bewegung des Führungsschlittens zu erlauben, ist der Verbindungsarm vorzugsweise entlang seiner Erstreckungsrichtung verschiebbar an dem Führungsschlitten geführt, insbesondere durch eine Durchführung (z.B. Führungsbohrung) im Führungsschlitten verschiebbar hindurchgeführt. Bei seiner Bewegung entlang der Führungsrichtung gleitet der Führungsschlitten daher auch gleichzeitig entlang der Erstreckungsrichtung des Verbindungsarms, da dieser schräg zu der Führungsrichtung verläuft.

Der Führungsschlitten weist insbesondere einen Gleitvorsprung auf, vorzugsweise zwei in entgegengesetzter Richtung abragende Gleitvorsprünge, welche jeweils in einer Führungsnut in einer Gehäusewandung des Nadelgreifers gleiten. Der Gleitvorsprung kann beispielsweise als zapfenartiger oder leistenartiger Abschnitt des Führungsschlittens ausgebildet sein, welcher mit seiner Mantelfläche in der Führungsnut gleitet.

Vorzugsweise ist die Position des Anschlages für den Führungsschlitten mittels einer Justiereinrichtung einstellbar. Die Justiereinrichtung umfasst vorzugsweise einen den Anschlag bereitstellenden Anschlagbolzen oder Anschlagstift, welcher entlang der Führungsrichtung verstellbar ist. Der Anschlagbolzen bzw. Anschlagstift kann beispielsweise in der Führungsnut geführt sein, welche auch den Gleitvorsprung des Führungsschlittens führt. Die Verstellung des Anschlagbolzens bzw. Anschlagstiftes kann beispielsweise durch Verdrehung eines Gewindes um die Führungsrichtung herum erfolgen. Hierzu kann beispielsweise eine auf einem Gewinde verdrehbare Rändelmutter vorgesehen sein. Die Rändelmutter und der Anschlagbolzen bzw. Anschlagstift können z.B. mit einer Gewindehülse verbunden sein bzw. mit dieser einstückig ausgebildet sein. Die Rändelmutter ist vorzugsweise durch Öffnungen im Gehäuse des Nadelgreifers hindurch verdrehbar, so dass die Nadelhubtiefe bequem bedarfsgerecht justiert werden kann.

Zur weiteren Ausgestaltung ist die Position des so einstellbaren Anschlages entlang der Führungsrichtung mit einem Anzeigemittel anzeigbar. Beispielsweise kann das Greifergehäuse eine Einblicköffnung oder Einblickvertiefung oder Einblickausnehmung aufweisen, durch welche der Anschlag selbst, beispielsweise der Anschlagstift, oder ein hiermit verbundener Zeiger erkennbar ist. Insbesondere kann das Anzeigemittel, z.B. die Einblicköffnung im Gehäuse, eine Skala aufweisen, so dass eine Anschlagposition reproduzierbar eingestellt werden kann.

Die Begrenzung des Nadelhubes über die Bewegungskopplung mit dem Führungsschlitten ermöglicht eine zuverlässige und konstruktiv einfache Vorgabe des Einfahr- und Ausfahrzustandes der Greifnadeln. Zur Verbesserung der Überwachung kann in der Einstelleinheit wenigstens ein Sensor zur Detektion einer Position des Führungsschlittens entlang der Führungsrichtung vorgesehen sein. Der Sensor ist insbesondere dazu ausgebildet, ein Anliegen des Führungsschlittens an dem Anschlag zu erkennen. Hierzu ist der Sensor in einer entlang der Bewegungsbahn des Führungsschlittens angeordneten Sensoraufnahme angeordnet. Der Sensor kann beispielsweise als Magnetsensor ausgebildet sein, mit welchem die Anwesenheit oder Abwesenheit eines an dem Führungsschlitten angeordneten Testmagneten detektierbar ist. Vorzugsweise sind zwei entlang der Führungsrichtung beabstandete Sensoren vorgesehen, so dass beispielsweise das Vorliegen der aktiven Stellung und der passiven Stellung detektierbar ist. Die detektierte Information kann beispielsweise an eine Greifersteuerung weitergegeben werden, welche den Nadelgreifer bedarfsgerecht, insbesondere abhängig von dessen Greifzustand (Werkstück gegriffen oder Werkstück nicht gegriffen) ansteuert.

Bei einer Ausgestaltung des Nadelgreifers mit Justiereinrichtung ist der Sensor vorzugsweise an einer Sensoraufnahme befestigt, deren Position entlang der Führungsrichtung ebenfalls mittels der Justiereinrichtung eingestellt wird. Wird die Position des Anschlages zur Anpassung an eine Werkstückdicke mit der Justiereinrichtung verstellt, so wird auch der Sensor mitbewegt. Somit kann unabhängig vom Justierzustand eine Endlagenkontrolle erzielt werden. Der Sensor wird bei Verstellung des Anschlages automatisch mitjustiert. Es ist nicht notwendig, nach Verstellung des Anschlages den Sensor separat einzustellen.

Bei der oben beschriebenen Ausgestaltung kann die Sensoraufnahme z.B. direkt an dem Anschlagbolzen/Anschlagstift oder an der Gewindehülse zur Verstellung des Anschlages der Justiereinrichtung angeordnet sein.

Grundsätzlich kann bei dem beschriebenen Nadelgreifer die Antriebseinheit einen pneumatisch oder elektrisch angetriebenen Antriebsaktor aufweisen. So kann z.B. ein vorfahrbarer und rückfahrbarer Antriebskolben vorgesehen sein, welcher den Antriebsaktor bildet. Ebenso kann ein elektrisch verlagerbarer Antriebsaktor, beispielsweise in einem elektrischen Linearantrieb, vorgesehen sein. Grundsätzlich ist es auch möglich, dass die Antriebseinheit einen rotatorisch in zwei Drehrichtungen angreifbaren Antriebsaktor aufweist, welcher über eine Getriebeeinrichtung die Nadelschlitten zur Bewegung in die aktive bzw. passive Stellung antreibt.

Unabhängig vom Antrieb treibt der Antriebsaktor vorzugsweise über eine Getriebeeinrichtung den Nadelschlitten an. Insbesondere wenn mehrere Nadelschlitten vorgesehen sind, so kann der Antriebsaktor über die Getriebeeinrichtung die mehreren Nadelschlitten gemeinsam antreiben. Beispielsweise weist der Antriebsaktor und die Nadelschlitten jeweils einen Zahnstangenabschnitt auf, wobei die Zahnstangenabschnitte mit einem Übertragungsritzel in Eingriff stehen, so dass ein Vorfahren und Zurückfahren des Antriebsaktors mit einer Hin- und Her-Schiebebewegung der Nadelschlittens gekoppelt ist.

Eine besonders vorteilhafte Ausgestaltung zur Führung der Bewegung des Nadelschlittens besteht darin, dass wenigstens eine Gehäuseinnenwandung, vorzugsweise aber zwei einander zugewandte Gehäuseinnenwandungen der Greifeinheit, ein Führungsrelief mit einem sich insbesondere länglich erstreckenden Nutabschnitt und einer mit diesem zusammenhängenden Entnahmeausbuchtung aufweisen. Der Nadelschlitten gleitet dabei mit einem Gleitabschnitt (z.B. Zapfen oder Leistenabschnitt des Nadelschlittens) in dem Nutabschnitt zwischen seiner aktiven und seiner passiven Stellung. Wenn der Übergang von Nutabschnitt und Entnahmeausbuchtung nicht blockiert ist (z.B. durch eine Wartungsplatte, siehe unten), so kann daher der Nadelschlitten in die Entnahmeausbuchtung eingeführt werden. Dabei ist die Entnahmeausbuchtung derart ausgeführt, dass nach Einführung des Gleitabschnittes des Führungsschlittens in die Entnahmeausbuchtung der Nadelschlitten aus der Greifeinheit entnehmbar ist. Dies ermöglicht auf einfache Weise eine Reinigung der beweglichen Nadelschlitten, z.B. wenn Fasern der gehandhabten Werkstücke bei Einfahren und Ausfahren der Nadeln in die Greifeinheit eingezogen werden. Außerdem ist ein einfaches Auswechseln der Nadelschlitten, beispielsweise bei Beschädigungen, möglich. Durch diese Maßnahme wird die Zuverlässigkeit bei der Handhabung von faserigen Werkstücken verbessert und die Störanfälligkeit verringert.

Diese Vorteile lassen sich für einen Nadelgreifer der vorstehend beschriebenen Art erzielen. Es ist jedoch grundsätzlich unabhängig von der konkreten Ausgestaltung der Antriebseinheit und/oder der Einstelleinrichtung möglich, mit der dargestellten Maßnahme die Zuverlässigkeit zu erhöhen und die Störanfälligkeit zu verringern.

Insofern wird die eingangs gestellte Aufgabe auch durch die beschriebene Ausgestaltung der Greifeinheit mit dem Führungsrelief gelöst, wobei der Nadelgreifer zumindest die folgenden Merkmale umfasst:
- Eine Greifeinheit mit einer dem zu greifenden Werkstück zugewandten Greiffläche und wenigstens einem (vorzugsweise zwei) Nadelschlitten mit zumindest einer Greifnadel, wobei der wenigstens eine Nadelschlitten verfahrbar ist in eine aktive Stellung, in welcher die Greifnadel um eine Nadelhubtiefe über die Greiffläche ausgefahren ist, und eine passive Stellung, in welcher die Greifnadel zurückgezogen ist;
- eine Antriebseinheit mit einem antreibbaren Antriebsaktor, welcher mit dem Nadelschlitten zu dessen Bewegung in die aktive und passive Stellung bewegungsgekoppelt ist;
- wobei wenigstens eine Gehäuseinnenwandung der Greifeinheit ein Führungsrelief mit einem Nutabschnitt und einer Entnahmeausbuchtung aufweist, wobei der Nadelschlitten einen Gleitabschnitt aufweist, mit welchem er in dem Nutabschnitt zwischen seiner aktiven und seiner passiven Stellung in der Greifeinheit gleitet, und wobei der Nadelschlitten durch Einführen des Gleitabschnitts in die Entnahmeausbuchtung des Führungsreliefs aus der Greifeinheit entnehmbar ist.

Der Antriebsaktor kann dabei grundsätzlich als ein vorfahrbarer und rückfahrbarer Kolben ausgestaltet sein, wie bereits beschrieben, jedoch auch als eine Antriebswelle zur Einleitung einer Drehantriebsbewegung ausgebildet sein. Hierbei kann eine Drehantriebsbewegung über ein geeignetes Getriebe in eine Einfahr- und Ausfahrbewegung für die Nadelschlitten umgewandelt werden. Die übrigen, vorstehend für den Nadelgreifer beschriebenen Merkmale können dann zur weiteren Ausgestaltung dienen. Insbesondere ist eine Einstelleinrichtung zur Einstellung der Nadelhubtiefe in der beschriebenen Art vorgesehen.

Unabhängig von der Ausgestaltung der Antriebseinheit kann die Greifeinheit ein Gehäuse aufweisen, mit einer Wartungsöffnung zur Entnahme des Nadelschlittens, wenn dieser in die Entnahmeausbuchtung des Führungsreliefs verbracht ist. Dabei ist vorzugsweise eine anbringbare und abnehmbare Wartungsplatte zum Verschließen der Wartungsöffnung derart vorgesehen, dass bei verschlossener Wartungsöffnung die Entnahmeausbuchtung des Führungsreliefs durch die Wartungsplatte blockiert ist. Somit ist ein Herausnehmen des Führungsschlittens nur bei abgenommener Wartungsplatte möglich.

Die Wartungsplatte kann mit einem Rastverschluss in dem Gehäuse lösbar gehaltert sein und hierzu einen oder mehrere geeignete Rastvorsprünge aufweisen, welche mit zugeordneten Rastausnehmungen im Gehäuse der Greifeinheit bzw. des Nadelgreifers verrasten.

Die Erfindung wird im Folgenden anhand der Figuren näher erläutert.

Es zeigen:
Figur 1 perspektivische Außenansicht eines Nadelgreifers;
Figur 2 Detailansicht auf die Greifeinheit mit ausgefahrenen Greifnadeln;
Figur 3 Schnittdarstellung zur Erläuterung der Einstelleinrichtung für die Nadelhubtiefe;
Figur 4 Detail zur Seitenansicht auf Nadelgreifer gemäß Figur 1;
Figur 5 perspektivische Darstellung des Führungsschlittens;
Figur 6 Teilschnittdarstellung durch die Greifeinheit entsprechend Figur 3;
Figur 7 der Nadelgreifer gemäß Figur 1 mit abgenommener Wartungsplatte;
Figur 8 Ansicht auf eine Gehäuseinnenwandung der Greifeinheit des Nadelgreifers;
Figur 9 schematische Darstellung zur Erläuterung des Austausches eines Nadelschlittens;
Figur 10 einen Nadelgreifer mit Antriebseinheit umfassend einen elektrischen Drehantrieb.

In der nachfolgenden Beschreibung sowie in den Figuren sind für identische oder einander entsprechende Merkmale jeweils dieselben Bezugszeichen verwendet.

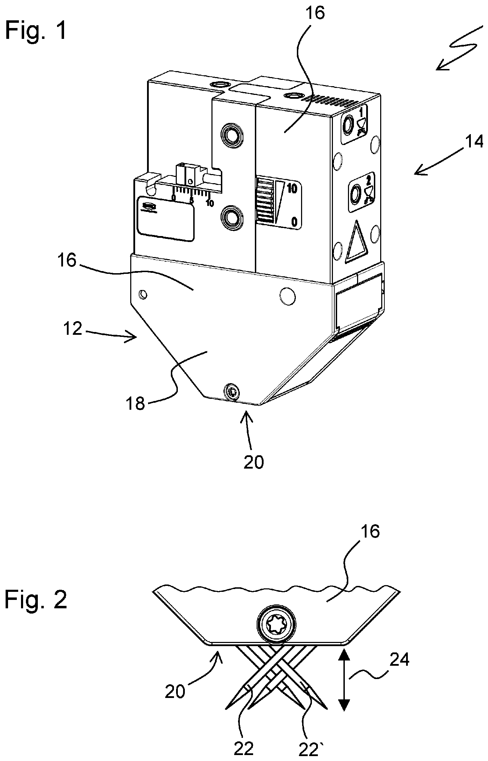

Die Figur 1 zeigt einen Nadelgreifer 10, der im dargestellten Beispiel modular aufgebaut ist, aus einer Greifeinheit 12 und einer zugeordneten Antriebseinheit 14. Der Nadelgreifer 10 weist ein Greifergehäuse 16 auf, das grundsätzlich mehrteilig für die verschiedenen Einheiten (mit entsprechenden Einheitengehäusen), jedoch auch einteilig für den Nadelgreifer 10 ausgebildet sein kann. Das Greifergehäuse 16 weist insbesondere im Bereich der Greifeinheit 12 Gehäusewandungen 18 (hier: Seitenwände 18) und eine dem Werkstück zugewandte Greiffläche 20 auf.

Wie in der Detailansicht gemäß Figur 2 erkennbar, können zum Greifen des Werkstückes mehrere Greifnadeln 22, 22' aus der Greiffläche 20 ausgefahren werden, wozu diese den Greifnadeln zugeordnete Nadelöffnungen aufweisen kann. Vorzugsweise sind mehrere Greifnadeln 22, 22' vorgesehen, welche beim Ausfahren aus der Greiffläche 20 schräg aufeinander zu laufen und sich überkreuzen. So wird ein stabiles Halten des Werkstückes ermöglichen. Die Greifnadeln 22, 22' können, wie im dargestellten Beispiel gezeigt, schräg zu der Greiffläche 20 orientiert sein. Eine Nadelhubtiefe 24 als Maß für die effektive Eindringtiefe der Nadeln ist senkrecht zu der Greiffläche 20 definiert.

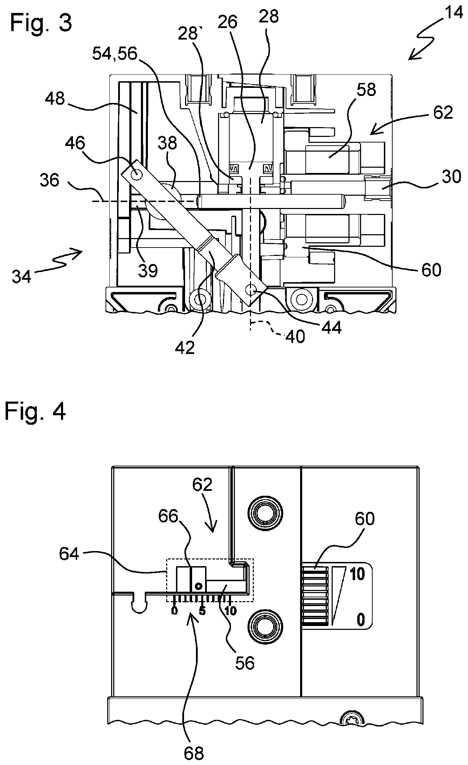

Wie in der Schnittdarstellung gemäß Figur 3 erkennbar, umfasst die Antriebseinheit 14 einen in zwei Richtungen verfahrbaren Antriebsaktor 26, der im dargestellten Beispiel pneumatisch angetrieben ist. Hierzu weist die Antriebseinheit 14 zwei innenliegende Druckräume 28, 28' auf, welche zur Bewegung des Antriebsaktors 26 in entgegengesetzte Richtungen mit Druckfluid (z.B. Druckluft) beaufschlagbar sind. Hierzu sind entsprechende Druckanschlüsse 30 vorgesehen.

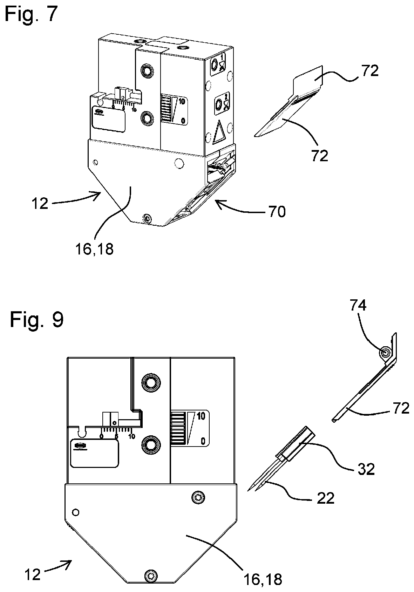

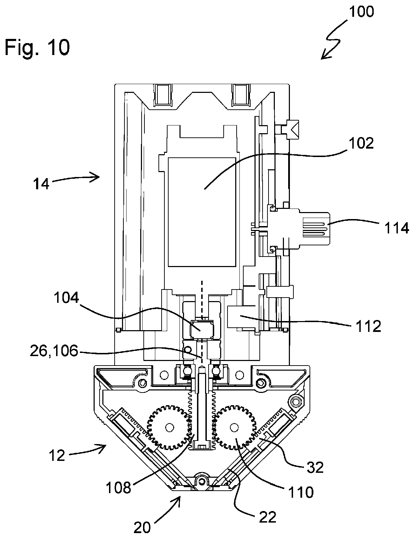

Der Antriebsaktor 26 ist über eine Getriebeeinrichtung (vgl. beispielsweise Figur 10: Zahnritzel) mit Nadelschlitten 32 (vgl. Figuren 9 und 10) bewegungsgekoppelt, so dass bei einem Rückfahren des Antriebsaktors 26 (in Figur 3 in Richtung nach oben, beispielsweise durch Beaufschlagung des Druckraumes 28'), der Nadelschlitten 32 in Richtung zu der Greiffläche 20 bewegt wird und die Greifnadeln 22 über die Greiffläche 20 ausgefahren werden (sog. aktive Stellung).

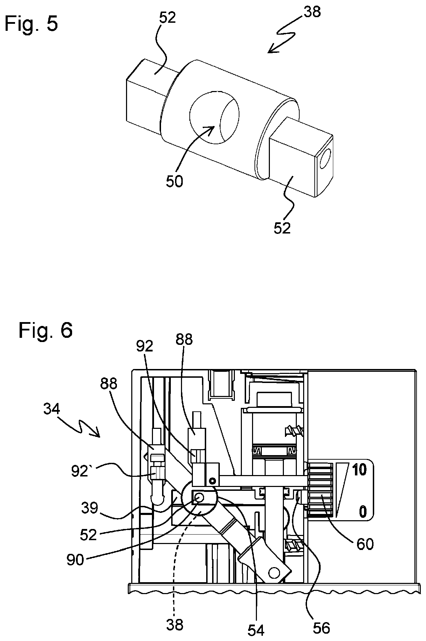

Der Nadelgreifer 10 umfasst außerdem eine Einstelleinrichtung 34, mit welcher die maximale Nadelhubtiefe 24 einstellbar ist, und welche insbesondere in den Figuren 3 und 6 genauer erkennbar ist. Die Einstelleinrichtung 34 umfasst einen in dem Greifergehäuse 16 entlang einer Führungsrichtung 36 verschiebbar gelagerten Führungsschlitten 38. Der Führungsschlitten 38 ist exzentrisch, radial außen liegend, zu dem Antriebsaktor 26 angeordnet. Der Führungsschlitten 38 ist im dargestellten Beispiel in der Art eines Gleitsteins ausgebildet; er ist in entsprechenden Führungsnuten 39 in einer Innenwandung des Greifergehäuses 16 geführt. Die Führungsrichtung 36, entlang welcher der Führungsschlitten 38 verschiebbar ist, erstreckt sich dabei senkrecht zu einer Antriebsrichtung 40, entlang welcher der Antriebsaktor 26 vorfahrbar und rückfahrbar ist.

Die Bewegung des Antriebsaktors 26 ist über einen Verbindungsarm 42 mit der Bewegung des Führungsschlittens 38 gekoppelt. Der Verbindungsarm 42 verläuft schräg zu der Antriebsrichtung 40 und zu der Führungsrichtung 36. Dabei ist der Winkel des Verbindungsarmes 42 zu den genannten Richtungen bei Bewegung des Antriebsaktors 26 fest, im dargestellten Beispiel ca. 45°. Dies wird dadurch erreicht, dass der Verbindungsarm 42 einerseits mit einem Befestigungspunkt 44 an dem Antriebsaktor befestigt ist, und andererseits mit einem Führungszapfen 46 in einer sich parallel zu der Antriebsrichtung 40 erstreckenden Laufnut in der Gehäuseinnenwandung verschiebbar geführt ist. Um bei Bewegung des Antriebsaktors 26 entlang der Antriebsrichtung 40 auch eine Bewegung des Führungsschlittens 38 entlang der Führungsrichtung 36 zu ermöglichen, ist der Verbindungsarm 42 entlang seiner Erstreckung verschiebbar durch eine Durchführung 50 (vgl. Figur 5) in dem Führungsschlitten 38 hindurchgeführt. Bei Bewegung des Antriebsaktors 26 entlang der Antriebsrichtung 40 wird somit der Verbindungsarm 42 als Ganzes entlang der Antriebsrichtung 40 bewegt. Dabei verschiebt sich der Führungsschlitten 38 entlang des Verbindungsarmes 42, wodurch der Führungsschlitten 38 entlang der Führungsrichtung 36 bewegt wird.

Der Führungsschlitten 38 weist zwei in entgegengesetzte Richtungen abragende Gleitvorsprünge 52 auf, welche in den Führungsnuten 39 der Gehäuseinnenwandung laufen (vgl. Figuren 5 und 6).

Die Bewegungsfreiheit des Führungsschlittens 38 entlang der Führungsrichtung 36 wird durch einen Anschlag 54 begrenzt, der im dargestellten Beispiel von einem Anschlagbolzen 56 gebildet ist, der in der Führungsnut 39 verläuft. Der Anschlagbolzen 56 ist mit einer Gewindehülse 58 verbunden, die auf einem Gewinde läuft und durch Verdrehen entlang der Führungsrichtung 36 verlagerbar ist. Zum Verdrehen der Gewindehülse 58 kann diese mit einer umlaufenden Rändelmutter 60 versehen sein, welche durch eine Bedienöffnung im Gehäuse verdrehbar ist (vgl. Figur 4).

Durch den verstellbaren Anschlag 54 wird eine Justiereinrichtung 62 bereitgestellt, mit der der Verfahrweg des Führungsschlittens 38 und somit mittelbar der maximale Hub des Antriebsaktors 28 begrenzt werden kann. Dies führt dazu, dass mittels der Justiereinrichtung 62 indirekt auch der Nadelhub 24 einstellbar ist.

Wie in Figur 4 angedeutet, kann das Greifergehäuse 16 außerdem eine Einblicköffnung 64 oder Einblickvertiefung 64 aufweisen, durch die die Position des Anschlages 54 beispielsweise mittels eines geeigneten Zeigers 66 erkennbar ist. Zur reproduzierbaren Einstellung der Nadelhubtiefe 24 kann beispielsweise im Bereich der Einblicköffnung oder Einblickvertiefung 64 eine Skala 68 an dem Gehäuse 16 vorgesehen sein (vgl. Figur 4).

Grundsätzlich unabhängig von der konkreten Ausgestaltung der Antriebseinheit 14 und/oder der Einstelleinrichtung 34 kann bei der Greifeinheit 12 auf komfortable Weise eine Auswechselbarkeit der Nadelschlitten 32 realisiert werden, wie im Folgenden anhand der Figuren 7 bis 9 erläutert. Das Greifergehäuse 16 weist eine Wartungsöffnung 70 auf, die sich im dargestellten Beispiel in einer zwischen den Seitenwandungen 18 und an die Greiffläche 20 anschließenden Schmalseite des Gehäuses 16 angeordnet ist. Die Wartungsöffnung 70 ist mit einer Wartungsplatte 72 verschließbar. Die Wartungsplatte 72 ist beispielsweise mit einem Rastvorsprung 74 im Innern der Gehäusewand verrastbar. Bei abgenommener Wartungsplatte 72 kann beispielsweise zu Reinigungszwecken der Nadelschlitten 32 aus der Greifeinheit 12 entnommen werden, wie in Figur 9 angedeutet.

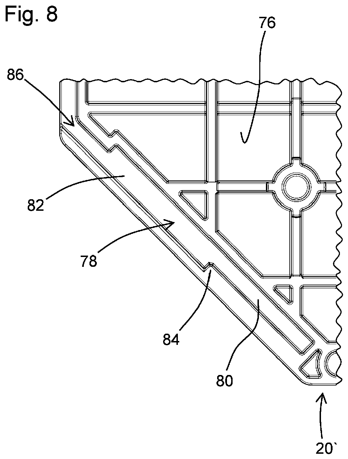

Um die Entnahme des Nadelschlittens 32 zu ermöglichen und gleichzeitig bei eingesetzter Wartungsplatte 72 eine betriebssichere Führung der Nadelschlitten 32 zu ermöglichen, kann die anhand von Figur 8 erläuterte Ausgestaltung dienen. Die Figur 8 zeigt eine Ansicht einer Gehäuseinnenwandung 76 des Greifgehäuses 16, im dargestellten Beispiel die Innenseite der Seitenwand 18. Die Gehäuseinnenwandung 76 weist in ihrem an die Wartungsöffnung 70 anschließenden Randbereich ein Führungsrelief 78 auf, welches als Vertiefung in der Gehäuseinnenwandung 76 ausgebildet ist. Das Führungsrelief 78 hat einen sich länglich erstreckenden Nutabschnitt 80, in welchem ein eingesetzter Nadelschlitten 32 zwischen aktiver und passiver Stellung hin und her gleiten kann. Der Nutabschnitt 80 erstreckt sich vorzugsweise entlang des an die Wartungsöffnung 70 angrenzenden Abschnittes der Gehäuseinnenwandung 26 in Richtung zu dem an die Greiffläche 20 anschließenden Abschnitt 20'. In seinem von der Greiffläche abgewandten Bereich weist das Führungsrelief 78 eine Entnahmeausbuchtung 82 auf, welche mit einem stufenartigen Absatz 84 in den Nutabschnitt 80 übergeht.

Der Nadelschlitten 32 gleitet mit einem beispielsweise leistenartigen Gleitabschnitt in dem Nutabschnitt 80 des Führungsreliefs 78. Zum Entnehmen des Nadelschlittens 32 kann dieser Gleitabschnitt in die Entnahmeausbuchtung 82 eingeführt werden und der Nadelschlitten 32 über eine Auszugführung 86 aus der Entnahmeausbuchtung 82 entnommen werden. Dies ist jedoch nur bei entfernter Wartungsplatte 72 möglich. Im eingesetzten Zustand blockiert die Wartungsplatte 72 die Entnahmeausbuchtung 82 und sichert den Nadelschlitten 32 in dem Nutabschnitt 80.

Um eine Endlagenkontrolle für die Greifnadeln 22 zu ermöglichen, können entlang der Führungsrichtung 36 Sensoren 88 angeordnet sein, mittels welchen die Annäherung eines Testmagneten 90, welcher an dem Führungsschlitten 38 angeordnet ist, detektierbar ist. Einer der Sensoren 88 kann beispielsweise in einer Sensoraufnahme 92 angeordnet sein, welche fest mit dem Anschlag 54 verbunden ist. Bei Verlagerung der Position des Anschlages mit der Justiereinrichtung 62 (vgl. Figur 3) wird dadurch die Position des Sensors entlang der Führungsrichtung 36 mit variiert. Denkbar ist jedoch auch, einen Sensor 88 an einer ortsfest im Greifergehäuse angebrachten Sensoraufnahme 92' vorzusehen, beispielsweise um einen eingefahrenen Zustand der Greifnadeln 22 zu erkennen.

Die Figur 10 zeigt einen Nadelgreifer 100, bei dem die Antriebseinheit 14 einen elektrischen Drehmotor aufweist, der im dargestellten Beispiel als Schrittmotor 102 ausgebildet ist. Der Schrittmotor 102 treibt, beispielsweise über eine Kupplung 104, einen als Antriebswelle 106 ausgestalteten Antriebsaktor 26 an. Die Antriebswelle 106 erstreckt sich (beispielsweise entlang der sog. Antriebsrichtung 44) in die Greifeinheit 12 hinein. Zum Antreiben der Nadelschlitten 32 weist die Antriebswelle 106 einen Schneckenabschnitt 108 auf, welcher mit Übertragungsritzeln 110 in Eingriff steht, die wiederum mit zugeordneten Zahnstangenabschnitten der Nadelschlitten 32 in Eingriff stehen. Durch gezieltes Ansteuern des Schrittmotors kann daher die Nadelhubtiefe präzise eingestellt werden. Hierzu kann eine Steuereinrichtung 112 vorgesehen sein, welche über eine Steckverbindung 114 mit einer Maschinensteuerung verbindbar ist.

## Patentansprüche

1. Nadelgreifer (10) zum Greifen eines Werkstückes, umfassend
- eine Greifeinheit (12) mit einer dem zu greifenden Werkstück zugewandten Greiffläche (20) und wenigstens einem Nadelschlitten (32) mit zumindest einer Greifnadel (22), wobei der wenigstens eine Nadelschlitten (32) verfahrbar ist in eine aktive Stellung, in welcher die Greifnadel (22) um eine Nadelhubtiefe (24) über die Greiffläche (20) ausgefahren ist, und einer passiven Stellung, in welcher die Greifnadel (22) zurückgezogen ist,
- eine Antriebseinheit (14) mit einem entlang einer Antriebsrichtung (40) vorfahrbaren und rückfahrbaren Antriebsaktor (26), wobei der Antriebsaktor (26) derart mit dem Nadelschlitten (32) bewegungsgekoppelt ist, dass dieser mittels Vorfahren und Rückfahren des Antriebsaktors (26) in die passive Stellung und die aktive Stellung bewegbar ist,
- und eine Einstelleinrichtung (34) zur Einstellung der Nadelhubtiefe (24), **dadurch gekennzeichnet, dass** die Einstelleinrichtung (34) einen senkrecht zur Antriebsrichtung (40) entlang einer Führungsrichtung (36) verlagerbaren Führungsschlitten (38) sowie einen Anschlag (54) für den Führungsschlitten (38) aufweist, wobei der Antriebsaktor (26) mittels eines Verbindungsarmes (42) derart mit dem Führungsschlitten (38) bewegungsgekoppelt ist, dass dieser bei Rückfahren des Antriebsaktors (26) in Richtung gegen den Anschlag (54) bewegt wird und ein weiteres Rückfahren des Antriebsaktors (26) unterbunden ist.

2. Nadelgreifer (10) nach dem vorherigen Anspruch, **dadurch gekennzeichnet, dass** sich der Verbindungsarm (42) schräg zu der Antriebsrichtung (40) und zu der Führungsrichtung (36) erstreckt.

3. Nadelgreifer (10) nach dem vorherigen Anspruch, **dadurch gekennzeichnet, dass** der Verbindungsarm (42) entlang seiner Erstreckung verschiebbar an dem Führungsschlitten (38) geführt ist, insbesondere durch eine Durchführung (50) im Führungsschlitten (38) verschiebbar hindurchgeführt ist.

4. Nadelgreifer (10) nach einem der vorherigen Ansprüche, **dadurch gekennzeichnet, dass** der Führungsschlitten (38) einen Gleitvorsprung (52), vorzugsweise zwei in entgegengesetzte Richtungen abragende Gleitvorsprünge (52) aufweist, wobei der Gleitvorsprung (52) in einer Führungsnut (39) in einer Gehäusewandung (18) des Nadelgreifers (10) gleitet.

5. Nadelgreifer (10) nach einem der vorherigen Ansprüche, **dadurch gekennzeichnet, dass** eine Justiereinrichtung (62) zur Einstellung der Position des Anschlages (54) entlang der Führungsrichtung (36) vorgesehen ist.

6. Nadelgreifer (10) nach einem der vorherigen Ansprüche, **dadurch gekennzeichnet, dass** die Position des Anschlages (54) entlang der Führungsrichtung (36) mit einem Anzeigemittel (64, 66) anzeigbar ist.

7. Nadelgreifer (10) nach einem der vorherigen Ansprüche, **dadurch gekennzeichnet, dass** wenigstens ein Sensor (88) zur Detektion einer Position des Führungsschlittens (38) entlang der Führungsrichtung (36), insbesondere zur Detektion eines Anliegens des Führungsschlittens (38) am Anschlag (54), vorgesehen ist.

8. Nadelgreifer (10) nach wenigstens den Ansprüchen 5 und 7, **dadurch gekennzeichnet, dass** der Sensor (88) an einer Sensoraufnahme (92) angeordnet ist, deren Position entlang der Führungsrichtung (36) ebenfalls mittels der Justiereinrichtung (62) einstellbar ist.

9. Nadelgreifer (10) nach einem der vorherigen Ansprüche, **dadurch gekennzeichnet, dass** die Antriebseinheit (14) einen pneumatisch vorfahrbaren und rückfahrbaren Antriebskolben (26) aufweist.

10. Nadelgreifer (100) nach einem der vorherigen Ansprüche, **dadurch gekennzeichnet, dass** die Antriebseinheit (14) einen elektrisch angetriebenen Antriebsaktor (26) aufweist.

11. Nadelgreifer (10) nach einem der vorherigen Ansprüche, **dadurch gekennzeichnet, dass** der Antriebsaktor (26) über eine Getriebeeinrichtung den einen oder die mehreren Nadelschlitten (32) antreibt.

12. Nadelgreifer (10) nach einem der vorherigen Ansprüche, **dadurch gekennzeichnet, dass** wenigstens eine Gehäuseinnenwandung (76) der Greifeinheit (12) ein Führungsrelief (78) mit einem Nutabschnitt (80) und einer Entnahmeausbuchtung (82) aufweist, wobei der Nadelschlitten (32) einen Gleitabschnitt aufweist, mit welchem er in dem Nutabschnitt (80) zwischen seiner aktiven und seiner passiven Stellung gleitet, und wobei der Nadelschlitten (32) durch Einführen des Gleitabschnitts in die Entnahmeausbuchtung (82) des Führungsreliefs (78) aus der Greifeinheit (12) entnehmbar ist.

13. Nadelgreifer (10) nach dem vorherigen Anspruch, **dadurch gekennzeichnet, dass** die Greifeinheit (12) ein Gehäuse (16) aufweist mit einer Wartungsöffnung (70) zur Entnahme des Nadelschlittens (32), wobei eine anbringbare und abnehmbare Wartungsplatte (72) zum Verschließen der Wartungsöffnung (70) derart vorgesehen ist, dass bei verschlossener Wartungsöffnung (70) die Entnahmeausbuchtung (82) durch die Wartungsplatte (72) blockiert ist.

14. Nadelgreifer (10) nach dem vorherigen Anspruch, **dadurch gekennzeichnet, dass** die Wartungsplatte (72) einen Rastvorsprung (74) aufweist, welcher bei Anbringen der Wartungsplatte (72) an dem Gehäuse (16) mit einer zugeordneten Rastausnehmung oder Rastöffnung verrastet.

## Claims

1. Needle gripper (10) for gripping a workpiece, comprising
- a gripper unit (12) with a gripping surface (20) facing the workpiece to be gripped, and at least one needle carriage (32) with at least one gripping needle (22), wherein the at least one needle carriage (32) can be displaced into an active position in which the gripping needle (22) is extended beyond the gripping surface (20) by one needle stroke depth (24), and in a passive position in which the gripping needle (22) is retracted,
- a drive unit (14) with a drive actuator (26) which can be driven forward and backward along a drive direction (40), wherein the drive actuator (26) is movably coupled to the needle carriage (32) so that the needle carriage can be moved into the passive position and into the active position by driving the drive actuator (26) forward and backward,
- a setting device (34) for setting the needle stroke depth (24),
**characterized in that** the setting device (34) comprises a guide carriage (38) which can be displaced perpendicularly to the drive direction (40) along a guide direction (36), and a stop (54) for the guide carriage (38), wherein the drive actuator (26) is movably coupled by means of a connection arm (42) to the guide carriage (38) so that, when the drive actuator (26) is driven backward, the guide carriage is moved in the direction toward the stop (54), and further driving backward of the drive actuator (26) is prevented.

2. Needle gripper (10) according to the preceding claim, **characterized in that** the connection arm (42) extends slantwise with respect to the drive direction (40) and to the guide direction (36).

3. Needle gripper (10) according to the preceding claim, **characterized in that** the connection arm (42) is slidably guided on the guide carriage (38) along its direction of extension, in particular it is slidably guided through a passage (50) in the guide carriage (38).

4. Needle gripper (10) according to any one of the preceding claims, **characterized in that** the guide carriage (38) has a sliding protrusion (52), preferably two sliding protrusions (52) protruding in opposite directions, wherein the sliding protrusion (52) slides in a guide groove (39) of a housing wall (18) of the needle gripper (10).

5. Needle gripper (10) according to any one of the preceding claims, **characterized in that** an adjustment device (62) for setting the position of the stop (54) along the guide direction (36) is provided.

6. Needle gripper (10) according to any one of the preceding claims, **characterized in that** the position of the stop (54) along the guide direction (36) can be displayed using a display means (64, 66).

7. Needle gripper (10) according to any one of the preceding claims, **characterized in that** at least one sensor (88) for detecting a position of the guide carriage (38) along the guide direction (36) is provided, in particular for detecting bearing of the guide carriage (38) against the stop (54).

8. Needle gripper (10) according to at least one of Claims 5 and 7, **characterized in that** the sensor (88) is arranged on a sensor recess (92), the position of which along the guide direction (36) can also be set by means of the adjustment device (62).

9. Needle gripper (10) according to any one of the preceding claims, **characterized in that** the drive unit (14) comprises a drive piston (26) which can be driven forward and backward pneumatically.

10. Needle gripper (100) according to any one of the preceding claims, **characterized in that** the drive unit (14) has an electrically driven drive actuator (26).

11. Needle gripper (10) according to any one of the preceding claims, **characterized in that** the drive actuator (26) drives the one or more needle carriages (32) via a gear unit.

12. Needle gripper (10) according to any one of the preceding claims, **characterized in that** at least one housing inner wall (76) of the gripper unit (12) comprises a guide relief (78) with a groove section (80) and with an extraction indentation (82), wherein the needle carriage (32) comprises a sliding section by means of which it slides in the groove section (80) between its active position and its passive position, and wherein the needle carriage (32) can be extracted from the gripper unit (12) by introducing the sliding section into the extraction indentation (82) of the guide relief (78).

13. Needle gripper (10) according to the preceding claim, **characterized in that** the gripper unit (12) comprises a housing (16) with a maintenance opening (70) for extracting the needle carriage (32), wherein a maintenance plate (72) for the purpose of closing the maintenance opening (70), which can be attached and removed, is provided so that, when the maintenance opening (70) is closed, the extraction indentation (82) is blocked by the maintenance plate (72).

14. Needle gripper (10) according to the preceding claim, **characterized in that** the maintenance plate (72) has a snap-in protrusion (74) which, in the case in which the maintenance plate (72) is attached to the housing (16), engages with an associated snap-in recess or snap-in opening.

## Revendications

1. Dispositif de préhension à aiguilles (10) permettant de saisir une pièce, comprenant :
- une unité de préhension (12) ayant une surface de préhension (20) tournée vers la pièce à saisir et au moins un chariot à aiguilles (32) équipé d'au moins une aiguille de préhension (22), le chariot à aiguilles (32) pouvant être déplacé dans une position active dans laquelle l'aiguille de préhension (22) est déployée d'une course d'aiguille (24) sur la surface de préhension (20), et une position passive dans laquelle l'aiguille de préhension (22) est repliée,
- une unité d'entraînement (14) équipée d'un actionneur d'entraînement (26) mobile en va-et-vient le long d'une direction d'entraînement (40), l'actionneur d'entraînement (26) étant couplé cinématiquement avec le chariot à aiguilles (32) de sorte que celui-ci puisse être déplacé dans la position passive et dans la position active par déplacement en va-et-vient de l'actionneur d'entraînement (26), et
- un dispositif de réglage (34) permettant de régler la course de déploiement (24) de l'aiguille,
**caractérisé en ce que**
le dispositif de réglage (34) comporte un chariot de guidage (38) pouvant être déplacé perpendiculairement à la direction d'entraînement (40) le long d'une direction de guidage (36), ainsi qu'une butée (54) pour le chariot de guidage (38), l'actionneur d'entraînement (26) étant cinématiquement couplé au chariot de guidage (38) au moyen d'un bras de guidage (42) de sorte que, lors d'un retour de l'actionneur d'entraînement (26), celui-ci puisse être déplacé en direction contre la butée (54), et qu'une poursuite du déplacement de retour de l'actionneur d'entraînement (26) soit empêchée.

2. Elément de préhension à aiguilles (10) conforme à la revendication précédente,
**caractérisé en ce que**
le bras de liaison (42) s'étend obliquement par rapport à la direction d'entraînement (40) et à la direction de guidage (36).

3. Elément de préhension à aiguilles (10) conforme à l'une des revendications précédentes,
**caractérisé en ce que**
le bras de liaison (42) est le long de son extension guidé en translation sur le chariot de guidage (38), et en particulier en translation dans un passage (50) du chariot de guidage (38).

4. Elément de préhension à aiguilles (10) conforme à l'une des revendications précédentes,
**caractérisé en ce que**
le chariot de guidage (38) comporte une saillie de glissement (52), et de préférence deux saillies de glissement (52) s'étendant dans des directions opposées, la saillie de glissement (52) glissant dans une rainure de guidage (39) d'une paroi du boîtier (18) de l'élément de préhension à aiguilles (10).

5. Elément de préhension à aiguilles (10) conforme à l'une des revendications précédentes,
**caractérisé en ce qu'**
il est prévu un dispositif d'ajustement (62) permettant de régler la position de la butée (54) le long de la direction de guidage (36).

6. Elément de préhension à aiguilles (10) conforme à l'une des revendications précédentes,
**caractérisé en ce que**
la position de la butée (54) le long de la direction de guidage (36) peut être indiquée par des moyens indicateurs (64, 66).

7. Elément de préhension à aiguilles (10) conforme à l'une des revendications précédentes,
**caractérisé en ce qu'**
il est prévu au moins un capteur (88) permettant de détecter la position du chariot de guidage (38) le long de la direction de guidage (36), en particulier permettant de détecter l'application du chariot de guidage (38) sur la butée (54).

8. Elément de préhension à aiguilles (10) conforme à au moins les revendications 5 et 7,
**caractérisé en ce que**
le capteur (88) est monté dans un logement de réception (92) dont la position le long de la direction de guidage (36) peut également être réglée au moyen du dispositif d'ajustement (62).

9. Elément de préhension à aiguilles (10) conforme à l'une des revendications précédentes,
**caractérisé en ce que**
l'unité d'entraînement (14) comporte un piston d'entraînement pneumatique (26) déplaçable en va-et-vient.

10. Elément de préhension à aiguilles (10) conforme à l'une des revendications précédentes,
**caractérisé en ce que**
l'unité d'entraînement (14) comporte un élément d'entraînement (26) à entraînement électrique.

11. Elément de préhension à aiguilles (10) conforme à l'une des revendications précédentes,
**caractérisé en ce que**
l'actionneur d'entraînement (26) entraîne le ou les chariot(s) à aiguilles (32) par l'intermédiaire d'un dispositif de transmission.

12. Elément de préhension à aiguilles (10) conforme à l'une des revendications précédentes,
**caractérisé en ce qu'**
au moins une paroi interne (76) du boîtier de l'unité de préhension (12) comporte un relief de guidage (78) ayant un segment de rainure (80) et un évasement d'extraction (82), le chariot à aiguilles (32) comprenant un segment de glissement avec lequel il glisse dans le segment de rainure (80) entre sa position active et sa position passive, et le chariot à aiguilles (32) pouvant être extrait de l'unité de préhension (12) par introduction du segment de glissement dans l'évasement d'extraction (82) du relief de guidage (78).

13. Elément de préhension à aiguilles (10) conforme à la revendication précédente,
**caractérisé en ce que**
l'unité de préhension (12) comporte un boîtier (16) équipé d'une ouverture de maintenance (70) permettant d'extraire le chariot à aiguilles (32), une plaque de maintenance (72) susceptible d'être mise en place et extraite pour fermer l'ouverture de maintenance (70) étant prévue de sorte que lorsque l'ouverture de maintenance (70) est fermée, l'évasement d'extraction (82) est bloqué par la plaque de maintenance (72).

14. Elément de préhension à aiguilles (10) conforme à la revendication précédente,
**caractérisé en ce que**
la plaque de maintenance (72) comporte une saillie d'encliquetage (74) qui, lors de la mise en place de la plaque de maintenance (72) sur le boîtier (16) s'encliquette avec un évidement d'encliquetage ou une ouverture d'encliquetage associée.
